Europäisches Patentamt

European Patent Office

Office européen des brevets

(11) Publication number: **0 382 063**
**A1**

## (12) EUROPEAN PATENT APPLICATION

(21) Application number: 90101844.0

(51) Int. Cl.⁵: **F02B 33/30**

(22) Date of filing: **30.01.90**

(30) Priority: **06.02.89 JP 25699/89**

(43) Date of publication of application:
**16.08.90 Bulletin 90/33**

(84) Designated Contracting States:
**DE FR GB IT**

(71) Applicant: **YAMAHA HATSUDOKI KABUSHIKI KAISHA**
**2500 Shingai**
**Iwata-shi Shizuoka-ken, 438(JP)**

(72) Inventor: **Masuda, Tatsuyuki**
**990-A201 Kamiokada**
**Iwata-shi Shizuoka-ken(JP)**

(74) Representative: **Patentanwälte Grünecker, Kinkeldey, Stockmair & Partner**
**Maximilianstrasse 58**
**D-8000 München 22(DE)**

(54) **2-Cycle multi-cylinder engine.**

(57) The invention relates to a 2-cycle multi-cylinder engine comprising a plurality of cylinders arranged side by side in a row in a unitary cylinder body and means for driving in unison a plurality of operating exhaust valves one for each cylinder wherein each of said valves being associated to at least a part of the exhaust port of the associated cylinder. The plurality of valves (17) are integrally coupled by joints (19) with play in between said coupling joints (19) and the associated coupled valves (17) to provide an operating valve assembly extending in the direction of the cylinder row.

Figur 1

## 2-Cycle Multi-Cylinder Engine

The present invention relates to a 2-cycle multi-cylinder engine comprising a plurality of cylinders arranged side by side in a row in a unitary cylinder body, and means for driving in unison a plurality of operating exhaust valves, one for each cylinder, each of said valves being associated to at least a part of an exhaust port of the associated cylinder. Specifically, the present invention relates to the valve drive mechanism for said operating exhaust valves, forming ON-OFF-valves operated in response to the output of the engine in order to vary the compression ratio in response to engine performance.

Some 2-cycle diesel engines for example are provided with a variable compression ratio mechanism. In such engines, the compression ratio is made higher both at the time of starting and in the low load operating range by means of said variable compression ratio mechanism to improve starting characteristics and to prevent the internal cylinder pressure from increasing in the high load operating range. As one of the variable compression ratio mechanisms described above, a mechanism is known (Japanese Unexamined Patent Publiction 63-65121) wherein a sub-exhaust port (bypass passage) is formed above a main exhaust port formed in a cylinder body and an on-off valve is provided in the sub-exhaust port. This arrangement closes said on-off valve both at the time of starting and in the low load operating range to increase the compression ratio.

When said variable compression ratio mechanism is to be mounted on a multi-cylinder engine, however, the way of mounting said on-off valves becomes a problem. Namely, because the cylinder body is deformed by the tightening of bolts at the time of assembly and due to thermal expansion after the start of the engine, if the on-off valves are formed in a body for example and mounted on the multi-cylinder engine, the valves may not be driven smoothly due to sticking or the like when the engine is operated.

Accordingly it is an object of the present invention to provide a 2-cycle multi-cylinder engine comprising a improved variable compression ratio mechanism capable of driving a plurality of operating exhaust valves smoothly and reliably at any time.

In order to accomplish the afore-mentioned objective, the persent invention contemplates an operating valve assembly including a plurality of valves, one for each cylinder, wherein the ends of adjacent operating valves are integrally coupled by a joint with play in between said joint and the coupled valves to provide a smoothly operating valve assembly extending in the direction of the cylinder row, i.e. in parallel to the axis of the crankshaft of the engine.

Preferably each operating valve is disposed in a sub-exhaust passage of the exhaust port of each cylinder, said sub-exhaust passage extending straight above a main exhaust passage into which the sub-exhaust passage is opened at a downstream outlet side thereof. Each cylinder is exhausted by such an exhaust port arrangement including a main exhaust passage and a bypassing valve controlled sub-exhaust passage, respectively.

It is, moreover, preferred that the joints which are adapted to couple adjacent operating valves leave axially and circumferential plays or gaps in between the joint and the adjacent valves which couplingly engage said joint.

As for the general disposal of the valve assembly including said inter-connecting joints said cylinder body provides a cylindrical through hole generally in parallel to the crankshaft axis of the engine and crossing each sub-exhaust passage of each cylinder, for rotatably receiving said cylindrical operating exhaust valves, one for each cylinder, separated from one another by said coupling joints.

In order to facilitate the convenient disposal of the valves and to secure the reliable operation thereof, one end of the operating valve assembly including said joints in between adjacent valves is abutted against a plug closing the end of the cylindrical through hole whereas the other end of the operating valve assembly is coupled with said drive means of the operating valve assembly.

As the operating valves act as ON-OFF-valves it is moreover preferred that said drive means comprising a step motor for integrally rotating the operating valve assembly via a coupling through an output shaft of the step motor. Said step motor, in turn is advantageously controlled by a controller to deliver ON-OFF-signals to the step motor for closing or opening the operating valves in response to engine load representing data.

In conjunction with the cross section of the associated sub-exhaust passage each operating valve has a communication hole of elongated circular cross section extending axially along the valve for opening and closing said sub-exhaust passage by rotating the valve either to a first position for closing the sub-exhaust passage or to a second position for opening said sub-exhaust passage.

An advantageous embodiment of the coupling with play in between a coupling joint and adjacent valves both ends of the operating valve are formed with shaft portions and fitting projections with each fitting projection being formed with flat portions.

In order to establish an appropriate coupling with play in between both ends of each joint are formed with recesses with a cylindrical through hole bored in the axial direction centrally through the joint and opening into the recesses, respectively. Accordingly the shaft portions and the projections formed on both ends of an operating valve respectively engage with the cylindrical holes and recesses of the joints with appropriate play in between so that the operating ON-OFF valves are connected and integrally coupled to a body through the joints leaving appropriate gaps and play both in the axial and circumferential directions, respectively.

According to the present invention, thus, even if deformation is produced in the cylinder body or the like wherein the operating exhaust valves (ON-OFF-Valves) are disposed such deformation is effectively absorbed by the play in between the valve and the joint resulting in the valves being driven smoothly at any time.

Preferred embodiments of the invention are laid down in the sub-claims.

In the following an embodiment of the present invention is explained in conjuction with the drawings attached, wherein

Fig. 1 is a vertical cross section of a 2-cycle diesel engine according to the present invention,

Fig. 2 is an enlarged cross section in the vicinity of the exhaust port of the engine as shown in figure 1,

Fig. 3 is a cross section taken along the line III-III of figure 2,

Fig. 4 is a perspective view of a connecting structure of a valve-joint-structure,

Fig. 5 is a diagrammatic top view on a cylinder block similar to figure 3, disclosing general aspects of the layout of the valve drive mechanism,

Fig. 6 is a performance characteristic diagram of the engine, and

Fig. 7 is a diagram showing different measurements versus load with the compression ratio as a parameter.

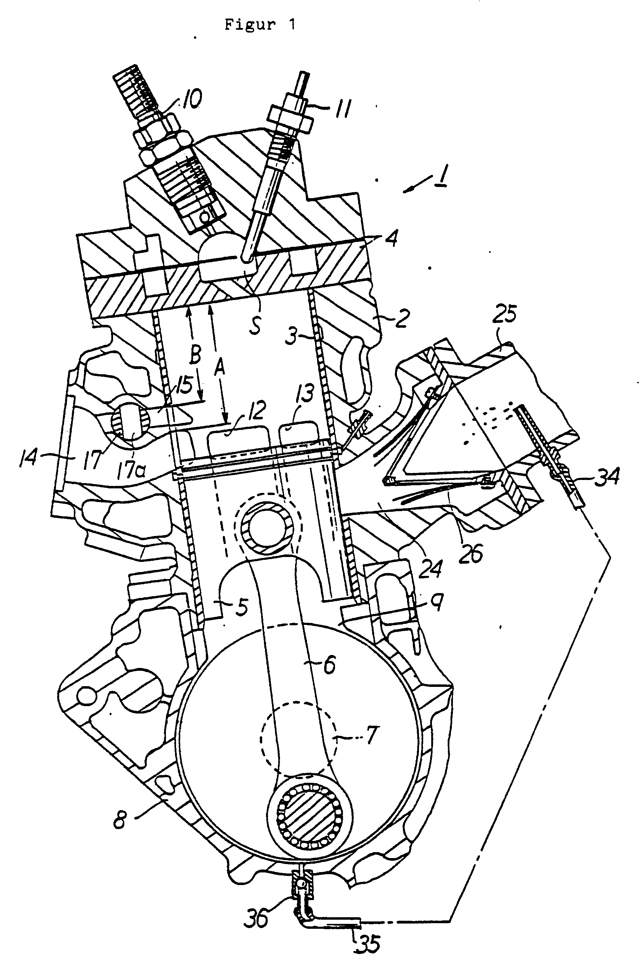

The engine 1 shown in Fig. 1 is a 2-cycle 3-cylinder diesel engine with the three cylinders disposed side by side in a cylinder body 2 covered with a cylinder head 4. In each of said cylinders 3 is disposed freely vertically slidably a piston 5 connected via a connecting rod 6 to a crankshaft 7. The crankshaft 7 extends in the direction perpendicular to the surface of the drawing (in the directin of the cylinder row) and is housed freely rotatably in a crank chamber 9 of a crankcase 8.

A sub-combustion chamber S is formed for each cylinder in said cylinder head 4. The fore-ends of a fuel injection valve 10 and of a glow plug 11 respectively face the sub-combustion chamber S.

In said cylinder body 2 are formed scavenging ports 12, 13 a main exhaust port 14, and a sub-exhaust port 15 for each cylinder. One end of these ports is opened to the inside of the cylinder 3 while the other ends of the scavenging ports 12, 13 are opened to said crank chamber 9.

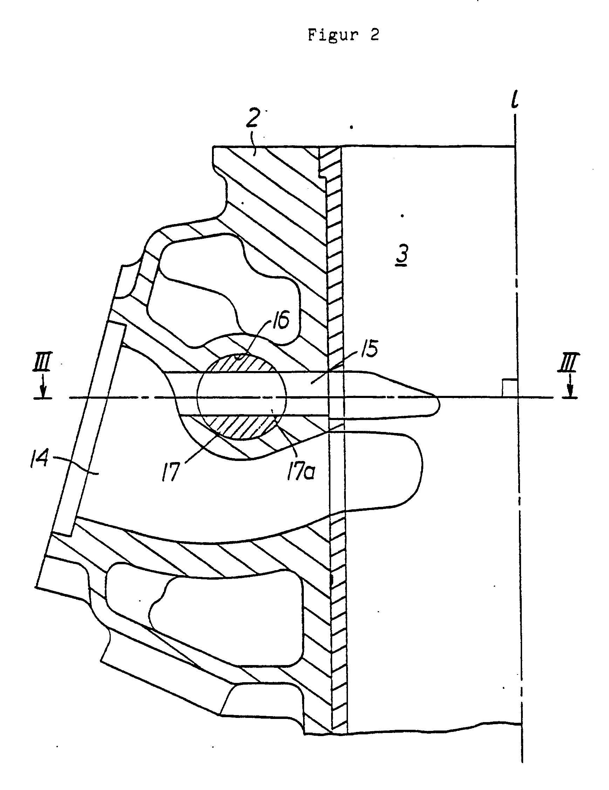

Said main exhaust port 14 is formed as shown in fig. 2 in detail to be curved upward toward the downstream (outlet) side. Above said main exhaust port 14 is formed the sub-exhaust port 15. One end of these main and sub-exhaust ports 14, 15 is opened to the inside of the cylinder 3. An exhaust pipe (not shown) is connected to the other end of the main exhaust port 14. The other end of the sub-exhaust port 15 is opened as shown in Figs. 1 and 2 to the main exhaust port 14.

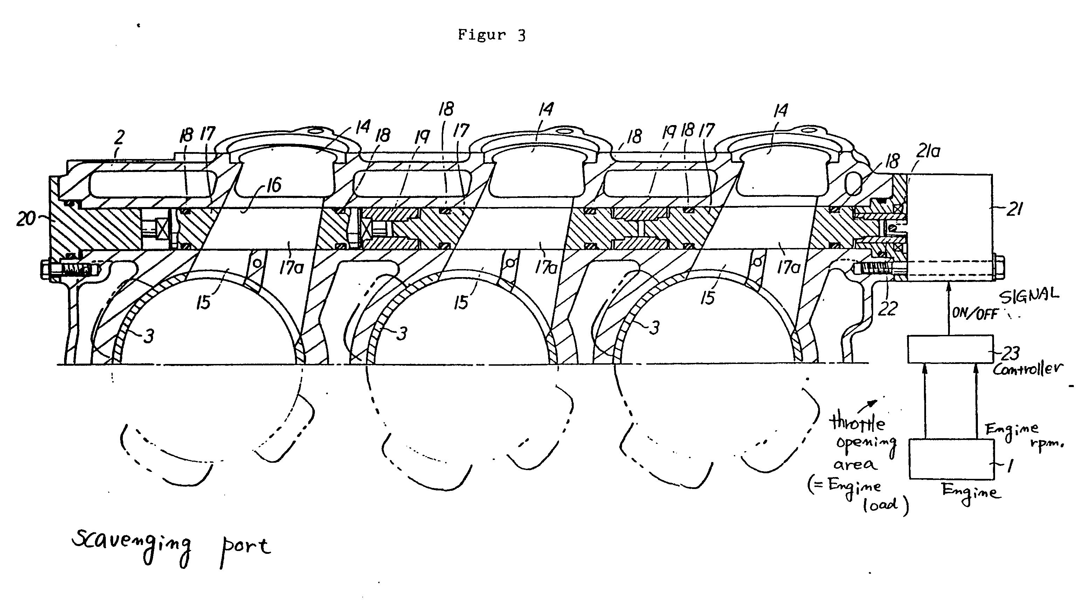

In the present embodiment, said sub-exhaust port 15 is formed in a straight line perpendicular to the center line 1 of the cylinder 3 when seen in the side view as shown in Fig. 2 and in the shape of narrowing straight line taper toward the downstream side when seen in the plan view as shown in Fig. 3. At an intermediate position of the sub-exhaust port 15 is bored a cylindrical hole 16 in the crankshaft direction (in the cylinder row direction) wherein, as shown in Fig. 3, a columnar operating exhaust valve 17 as a kind of on-off valve is disposed freely rotatable for each cylinder. The play between the outer circumferential surface of both ends of the on-off valve 17 and the inner circumferential surface of the hole 16 is hermetically sealed with O-rings 18.

In said exhaust valve 17, in the following denoted as on-off valve 17, is bored as shown in Figs. 1 - 4, a communication hole 17a of an elongated circular cross section. The on-off valve 17 may be switched by the rotation thereof either to a first position (see Fig. 1) for closing the sub-exhaust port 15 or to a second position (see Figs. 2 and 3) for opening said sub-exhaust port 15. The three on-off valves, one for each cylinder, are connected as shown in Fig. 3 via joints 19 in a body in the cylinder 3 row direction in a straight line. One end of the on-off valve 17 abuts against a plug 20 closing one end of the cylindrical hole 16 while the other end thereof is connected to an output shaft 21a of a step motor 21 via a coupling 22. As shown in Fig. 3, data of the throttle opening and the revolution speed of the engine are sent to a controller 23 which, based on the data, determines to open or close the on-off valves 17 and, based on the determination, sends an on-off signal to said step motor 21 to control the drive of the step motor 21.

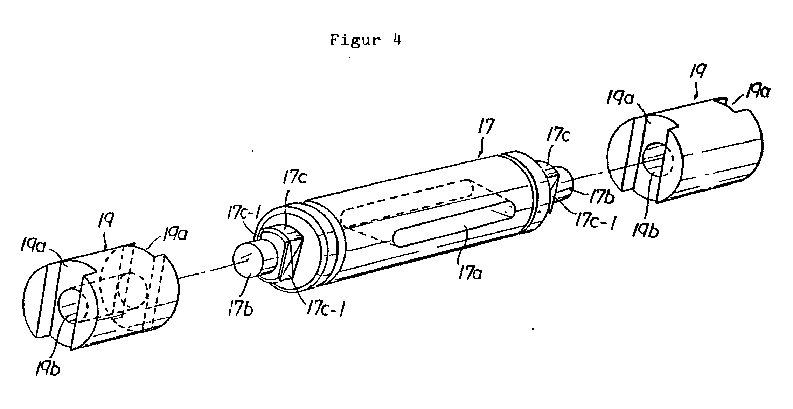

The connecting structure of the on-off valves 17 is explained herewith according to Fig. 4. Both ends of the on-off valve 17 are formed with shaft portions 17b and fitting projections 17c, with each fitting projection formed with flat portions 17c-1.

Both ends of each joint 19 on the other hand are formed with recesses 19a with a cylindrical hole 19b bored in the axial direction and in the center of the joint 19 opening to the recesses 19a.

The shaft portion 17b and the projection 17c formed on one end of the on-off valve 17 respectively fit into the cylindrical hole 19b and the recess 19a with appropriate play so that the on-off valves 17 are connected in a body via joints 19 with appropriate play both in the axial and circumferential directions.

The sub-exhaust port 15, on-off valve 17, step motor 21, controller 23, etc. constitute a variable compression ratio mechanism.

As shown in fig. 1, an intake port 24 is formed on a side of the cylinder body 2, and one end of the suction port 24 is opened to said crank chamber 9 while the other end of the suction port 24 is connected to a suction pipe 25. The suction port 24 is provided with a reed valve 26 for permitting the air flow only to the direction of the crank chamber 9. On the upstream side of the reed valve 26 is provided an oil injection valve 34. The oil injection valve 34 is connected via a pipe 35 and a check valve 36 to the bottom of said crank chamber 9. Because oil collected in the bottom of the crank chamber 9 is led through the check valve 36 and the pipe 35 to the injection valve 34, and injected to adhere to the reed valve 26, hitting noise of the reed valve 26 is reduced.

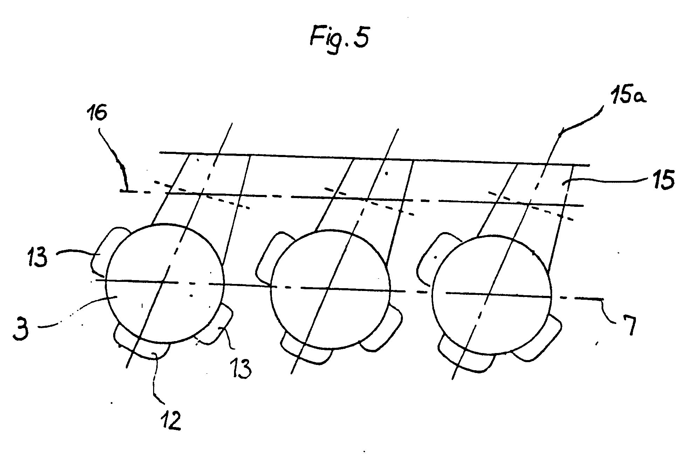

By means of a pure diagrammatic plan view on the cylinder row and the cylinder body of Fig. 5 it is indicated that the valve driving system acording to the present invention is convenient and implies a simplified structure despite the compactness of the engine in the crankshaft direction induced through a zig-zag arrangement of the scavenging ports 12, 13 of the cylinder block. Said "twisted" arrangement of the cylinders 3 results in the sub-exhaust passages 14 extending inclined (not perpendicular) to the crankshaft 7 in plan view. In such a case if the exhaust valves were located to extend perpendicular to the center axis 15a of each sub-exhaust passage 15 (as indicated in dotted lines in Fig. 5) then the exhaust valve driving system would become complicated.

Thus, according to the present invention, the center axis of the bore 16 receiving the exhaust valves was made to be a straight line in parallel to the crankshaft 7. In this case another difficulty could arise, namely, the through hole 17a of each valve (see Fig. 4) is not symmetrical with respect to the center axis 15a of the associated sub-exhaust passage 15 in plan view. Accordingly, trying to enable the communication hole 17a of each valve 17 to be machined easily said communication hole 17a does not completely meet with the sub-exhaust passage (15) in conjunction with the rotation of the exhaust valve (17). However, as the exhaust valve 17 only stops at two definite positions (opened or closed condition) the afore-mentioned circumstances will not develop into a serious problem.

Next, the function of the 2-cycle diesel engine 1 is explained.

At the time of starting and in a low load operating range of the engine 1, each on-off valve 17 is in the closed condition as shown in Fig. 1 so that each sub-exhaust port 15 is closed with the on-off valve 17. When the piston 5 ascends in the cylinder 3 under this condition, a negative pressure is produced in the crank chamber 9 and intake (air) is drawn by the negative pressure and introduced from the suction pipe 25 through the reed valve 26 to the crank chamber 9. While this intake undergoes primary compression as the piston 5 descends during combustion and scavenging stroke and the piston 5 uncovers the main exhaust port 14 followed by the uncovering of the scavenging ports 12,13 said primarily compressed intake flows through the scavenging ports 12, 13 into the cylinder 3 to expel exhaust gas produced in the cylinder 3 by the combustion of fuel to the main exhaust port 14 side. While the intake in the cylinder 3 is compressed with the ascending piston 5 when the piston 5 covers the scavenging ports 12, 13 and the main exhaust port 14, the stroke A of the piston 5 at this time is large to increase the compression ratio of the engine.

When the piston 5 approaches the top dead center, the temperature and pressure of the intake in the cylinder 3 increase, an appropriate amount of fuel is injected from the injection valve 10 into the sub-combustion chamber S and ignited and combusted with the intake of high temperature and high pressure. The pressure of high temperature, high pressure exhaust gas produced by the combustion is exerted on the piston head to cause the piston 5 to start descending. When the piston 5 uncovers the main exhaust port 14, and the scavenging ports 12, 13, the intake primarily compressed in the crank chamber as described above flows from the scavenging ports 12, 13 into the cylinder 3 and thereafter the same actions as described above are repeated.

On the other hand, under the operating condition of the engine other than that described above, the controller 23, based on the data of the throttle opening and rpm inputted thereto, sends an on-signal to the step motor 21 which, based on the signal, causes the on-off valves 17 to rotate in unison and to open the sub-exhaust port 15 as shown in Figs. 2 and 3.

Under the condition of the sub-exhaust port being open in this way, the compression stroke B of the piston 5 is smaller than the stroke A described above. As a result, the compression ratio of the engine 1 is kept low.

In the combustion and scavenging stroke while the piston 5 is descending, the sub-exhaust port 15 is first uncovered and the exhaust gas in the cylinder 3 flows through the sub-exhust port 15 to the main exhaust port 14 and exhausted via an exhaust pipe and a muffler (both not shown) to the atmosphere. When the main exhaust port 14 is also uncovered, the exhaust gas is exhausted through both main and sub-exhaust ports 14, 15.

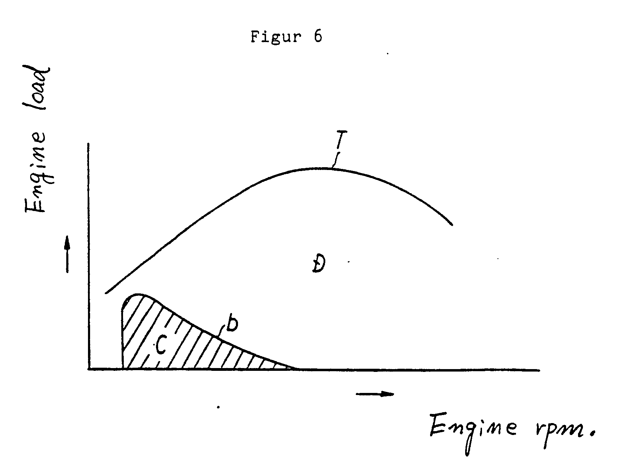

The compression ratio of the engine 1 is increased at the time of starting and in the range C of low load, low rpm operation as shown in Fig. 6. In the other range D, the compression ratio is kept low. Fig. 6 shows the performance characteristic of the engine 1 with T showing the torque curve.

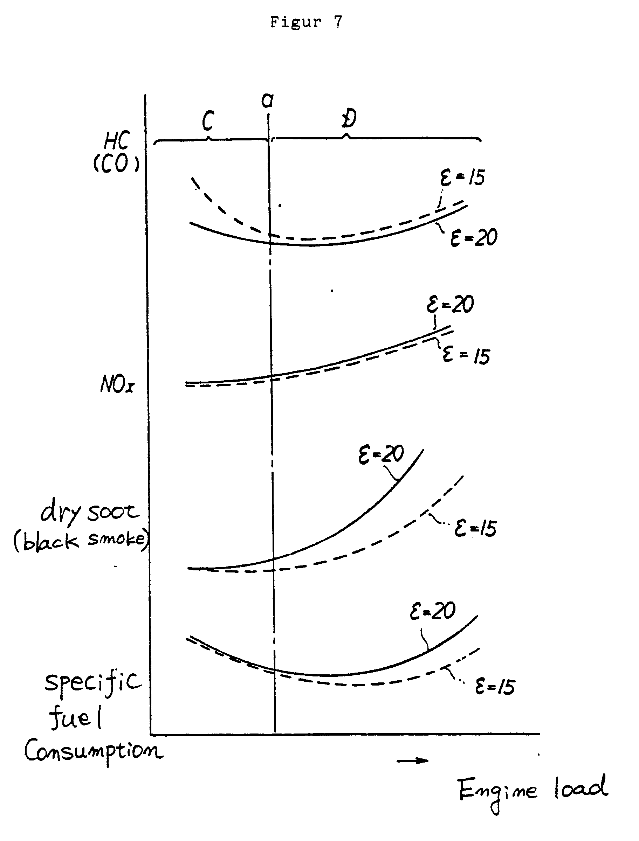

Fig. 7 shows the measurements of HC(C = O), NOx concentration, black smoke amount, and fuel consumption versus load at a certain rpm with different compression ratios. The solid lines show the measurements with the compression ratio of Σ = 20 and the dashed lines with the compression ratio of Σ = 15.

In the low load range C defined with a boundary line (a) as seen from Fig. 7, the HC(CO) concentration is lower with higher compression ratio. Therefore, the on-off valves 17 are closed in this range to keep the compression ratio high. In the high load range D as shown in Fig. 6, the NOx concentration, black smoke amount and the fuel consumption are lower with higher compression ratio. Therefore, the on-off valves 17 are opened to keep the compression ratio low.

As is evident form Fig. 6, the boundary line b of the range C shifts to higher load side as the engine rpm lowers. Therefore, the lower the engine rpm, the more it is necessary to keep the compression ratio high up to a higher load range.

As described heretofore, because the on-off valves 17 are connected via joints 19 with some play both in the axial and circumferential directions in a straight line and in a body, even if the deformation of the cylinder body 2 is produced wherein the valves 17 are disposed, such deformation is effectively absorbed by the play between the on-off valves 17 and the joints 19. As a result, a situation does not occur wherein the on-off valves 17 do not move smoothly due to sticking. As a result, the on-off valves 17 can be smoothly driven at any time and perform their function satisfactorily enough.

While the above embodiment describes the valve drive mechanism of the variable compression ratio mechanism mounted specifically on the 2-cycle diesel engine, the present invention is also applicable for example to the valve drive mechanism of the variable exhaust timing mechanism mounted on the main exhaust port or sub-exhaust port of the 2-cycle gasoline engine .

As is evident from the description above, the present invention has the effect that even if deformation is produced in the cylinder body or the like wherein the on-off valves are installed, such deformation is effectively absorbed by the play between the on-off valves and the joints so that the on-off valves are driven smoothly at any time.

## Claims

1. A 2-cycle multi-cylinder engine comprising a plurality of cylinders arranged side by side in a row in a unitary cylinder body and means for driving in unison a plurality of operating exhaust valves, one for each cylinder, each of said valves being associated to at least a part of the exhaust port of the associated cylinder, **characterized in that**, the ends of adjacent operating valves (17) are integrally coupled by a joint (19) with play in between said joint (19) and the coupled valves (17) to provide an operating valve assembly extending in the direction of the row of cylinders (3).

2. A 2-cycle multi-cylinder engine as claimed in claim 1 **characterized in that** , each operating valve (17) is disposed in a sub-exhaust passage (15) of the exhaust port (14,15) of the cylinder (3).

3. A 2-cycle multi-cylinder engine as claimed in claim 2, **characterized in that**, each sub-exhaust passage (15) extends straight above a main exhaust passage (14) into which the sub-exhaust passage (15) is opened at the downstream outlet side thereof.

4. A 2-cycle multi-cylinder engine as claimed in at least one of the preceeding claims 1 to 3 **characterized in that**, said joints (19) couple adjacent valves (17) with axial and circumferential gaps or play in between each joint (19) and the adjacent valves (17) engaging said joint (19)

5. A 2-cycle multi-cylinder engine as claimed in at least one of the preceeding claims 1 to 4, **characterized in that**, said cylinder body provides for a cylindrical through hole (16) generally extending in parallel to the engines crankshaft (7) and crossing each sub-exhaust passage (15) of the cylinders (3) for rotatably receiving said cylindrical operating exhaust valves (17), one for each cylinder (3) said valves (17) being separated from one another by said coupling joints (19).

6. A 2-cycle multi-cylinder engine as claimed in at least one of the preceeding claims 1 to 5, **characterized in that**, one end of the operating valve assembly including said joints (19) in between adjacent valves (17) is abutted against a plug (20), plugging one end of the cylindrical through hole (16) whereas the other end of the operating valve assembly is coupled with said drive means (21,22) of the operating valve assembly.

7. A 2-cycle multi-cylinder engine as claimed in claim 6 **characterized in that**, said drive means comprising a step motor (21) for integrally rotating the operating valve assembly via a coupling (22) through an output shaft (21a) of the step motor (21).

8. A 2-cycle multi-cylinder engine as claimed in claim 6 or 7 **characterized in that**, said step motor (21) is controlled by a contoller (23) to deliver ON-OFF signals to the step motor (21) for closing or opening the operating valves (17) in response to engine load representing data.

9. A 2-cycle multi-cylinder engine as claimed in at least one of the preceeding claims 1 to 8 **characterized in that**, each operating valve (17) has a communication hole (17a) of elongated circular cross section extending axially along the valve (17) as a radial through opening, for opening and closing the sub-exhaust passage (15) by rotating the valve either to a first position for closing the sub-exhaust passage (15) or to a second position for opening said sub-exhaust passage (15).

10. A 2-cycle multi-cylinder engine as claimed in at least one of the preceeding claims 1 to 9 **characterized in that,** both ends of the operating valve (17) are formed with shaft portions (17b) and fitting projections (17c), each fitting projection (17c) being formed with flat portions (17c1) respectively.

11. A 2-cycle multi-cylinder engine as claimed in claim 10 **characterized in that**, both ends of each joint (19) are formed with recesses (19a) with a cylindrical hole (19b) bored in the axial direction as a through hole in the center of the joint (19) opening into the recesses (19a).

Figur 1

Figur 2

Figur 3

Figur 4

EP 0 382 063 A1

Fig. 5

Figur 6

Figur 7

| DOCUMENTS CONSIDERED TO BE RELEVANT | | | EP 90101844.0 |
|---|---|---|---|
| Category | Citation of document with indication, where appropriate, of relevant passages | Relevant to claim | CLASSIFICATION OF THE APPLICATION (Int Cl⁵) |
| X | <u>GB - A - 807 709</u> (SULZER) * Totality * | 1 | F 02 B 33/30 |
| Y | | 2-4 | |
| Y | <u>EP - A1 - 0 165 655</u> (KAWASAKI) * Fig. 8 * | 2-4 | |
| A | | 5 | |
| X | <u>US - A - 4 541 371</u> (KAGEYAMA et al.) * Totality, especially fig. 9-15 * | 1 | |
| A | | 9,10 | |

TECHNICAL FIELDS
SEARCHED (Int Cl⁵)

F 02 B 25/00
F 02 B 27/00
F 02 B 33/00
F 02 D  9/00
F 02 D 13/00
F 02 D 39/00
F 02 D 15/00

The present search report has been drawn up for all claims

| Place of search | Date of completion of the search | Examiner |
|---|---|---|
| VIENNA | 09-05-1990 | PIPPAN |